## Europäisches Patentamt
## European Patent Office
## Office européen des brevets

(19)

(11) Numéro de publication: **0 077 251**
**B1**

(12) # FASCICULE DE BREVET EUROPEEN

(45) Date de publication du fascicule du brevet:
**10.07.85**

(21) Numéro de dépôt: **82401800.6**

(22) Date de dépôt: **01.10.82**

(51) Int. Cl.⁴: **G 06 K 13/12**, G 06 K 13/14,
B 07 C 3/06

(54) **Dispositif de guidage et de réception de lettres en sortie de machine à trier le courrier, et machine équipée d'un tel dispositif.**

(30) Priorité: **09.10.81 FR 8119080**

(43) Date de publication de la demande:
**20.04.83 Bulletin 83/16**

(45) Mention de la délivrance du brevet:
**10.07.85 Bulletin 85/28**

(84) Etats contractants désignés:
**CH DE GB IT LI NL**

(56) Documents cités:
**DE - A - 2 939 343**
**FR - A - 807 591**
**FR - A - 1 593 144**
**US - A - 3 052 467**
**US - A - 3 371 926**

**IBM TECHNICAL DISCLOSURE BULLETIN, vol. 7, no. 8, janvier 1965, page 714, New York (USA); H.P. BRAEN et al.: "Document stacker"**

(73) Titulaire: **HBS, 25 rue de Chony, F-26500 Bourg les Valence (FR)**

(72) Inventeur: **Eyer, Jean, THOMSON-CSF SCPI 173, bld Haussmann, F-75379 Paris Cedex 08 (FR)**

(74) Mandataire: **Weinmiller, Jürgen et al, Zeppelinstrasse 63, D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention concerne un dispositif de guidage et de réception de lettres en sortie de machine à trier le courrier.

A la sortie des dispositifs de tri de courrier les lettres sont dirigées par différents systèmes vers leurs cases de réception. En général, ces cases sont constituées d'un plateau mobile horizontal sur lequel tombent les lettres pour former une pile. Au fur et à mesure que la pile se forme le plateau descend vers le fond de la case. Un ressort de rappel tend à maintenir une pression constante sur la pile de lettres prise en sandwich entre le plateau mobile et un galet taqueur.

De tels dispositifs ne sont pas adaptés au traitement de courrier de formats variés. Le réglage du ressort de rappel est déjà délicat dans le cadre d'une fourchette de poids réduite, mais devient impossible si les écarts sont importants. Les lettres situées à la partie supérieure de la pile frottent en permanence sur le galet de taquage. Il en résulte une usure relativement rapide de ce galet et un risque de marquage des lettres. La complexité de ces systèmes amène donc des difficultés de maintenance et un prix de revient élevé. De plus, la case étant formée de parois pleines ne permet pas une bonne visibilité des lettres et conduit à des niveaux sonores élevés en fonctionnement.

La présente invention a pour but de palier ces inconvénients et concerne un dispositif de guidage et de réception des lettres en sortie de machine à trier le courrier comportant un système de convoyage des lettres coopérant avec au moins une case de réception, caractérisé en ce que chaque case se présente sous la forme d'un panier dont les parois permettent la visibilité de son contenu, les lettres dès leur sortie du système de convoyage étant prises en charge par un balancier qui les freine et les guide vers le fond du panier choisi pour constituer une pile, et dont le point d'articulation est solidaire d'un volet chargé de dévier les lettres du système de convoyage.

Les principaux avantages d'un tel dispositif sont essentiellement les suivants:

— admettre une plus grande diversité de poids et de format de lettres; en effet un tel dispositif est insensible au poids des lettres pour la formation de la pile, il n'y a pas d'équilibrage par ressort, le fond de case est fixe et le poids du balancier reste constant;
— permettre une visibilité totale de la case de réception;
— être simple et de maintenance aisée;
— éviter tout phénomène gênant engendré par l'électricité statique due au frottement des lettres sur une matière plastique (galet de taquage);
— présenter, en fonctionnement, un niveau sonore acceptable.

La présente invention concerne plus précisément un dispositif de guidage et de réception de lettres en sortie de machine à trier le courrier comportant un système de convoyage des lettres coopérant avec au moins une case de réception, caractérisé en ce que chaque case se présente sous la forme d'un panier, dont les parois permettent la visibilité de son contenu, les lettres des leur sortie du système de convoyage étant prises en charge par un balancier qui les freine et les guide vers le fond du panier choisi pour constituer une pile, et dont le point d'articulation est solidaire d'un volet chargé de dévier les lettres du système de convoyage.

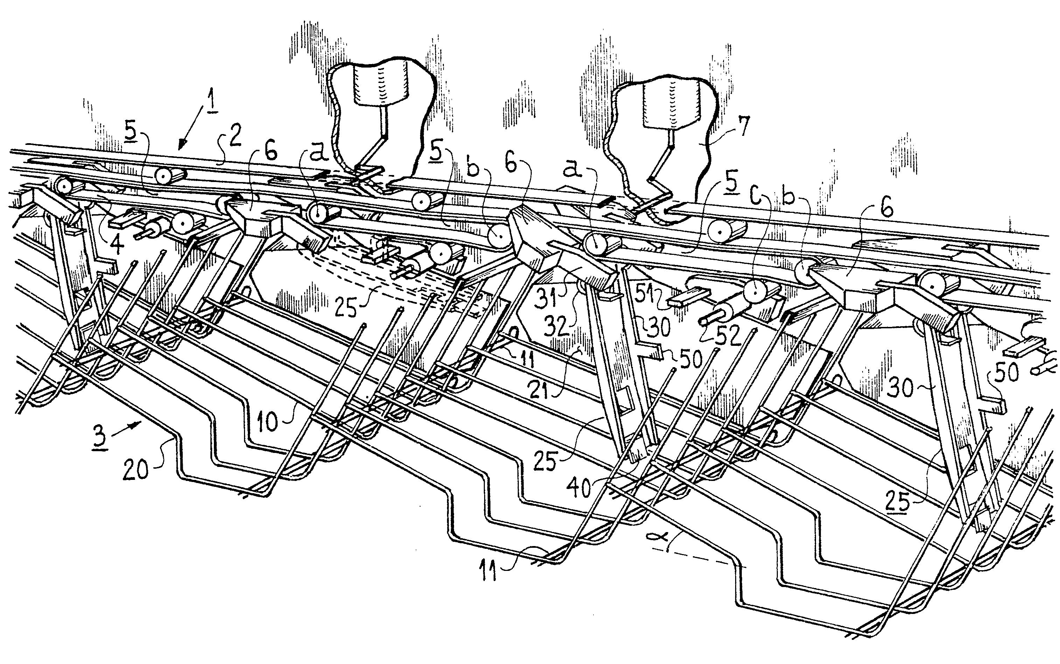

L'invention sera mieux comprise à l'aide des explications qui vont suivre et de la figure unique jointe qui représente schématiquement un dispositif conforme à l'invention.

Les lettres sont acheminées au moyen d'un système de convoyage 1 à courroies. Une première courroie supérieure 2 dite courroie d'entraînée par des moyens moteurs non représentés. Sur la figure, trois cases de réception dit »panier« 3 dans la suite de la description sont schématisées. En fait ce nombre peut être quelconque et varier de 1 à n selon l'application considérée. Cette courroie supérieure 2 coopère avec une courroie sans fin inférieure 4 qui est entraînée par la première (par friction) de telle sorte que les lettres se trouvant pincées entre elles deux, soient convoyées vers leur destination finale à savoir l'un des paniers 3. Il y a autant de tronçons 5 de courroies inférieures tournant autour de poulies a et b, que de paniers 3. Un tendeur C est associé à chaque tronçon. Entre chaque tronçon 5 un volet 6 assure la continuïté du cheminement des lettres entre un tronçon amont et un tronçon aval lorsqu'il est en position de repos. Ce volet peut occuper deux positions, l'une de repos, l'autre de déviation de sorte que si sous l'action d'un moyen de commande tel qu'un électro-aimant 7 par exemple, il est mis en position de déviation, il intercepte la lettre qui se présente à son niveau et la dévie vers le panier 3 auquel il est associé. Ce mouvement d'un volet d'une position dans une autre est commandé par un programmateur.

Dans le cas où l'ordre a été donné à l'électro-aimant concerné de mettre le volet en position de déviation (c'est le cas par exemple du volet associé au panier que occupe le centre de la figure), toutes les lettres se présentant à son niveau sont orientées vers le panier correspondant où se forme une pile. Les parois de celui-ci permettent la visibilité de son contenu et sont réalisées par exemple en matériau transparent ou à claire-voie. Comme le montre la figure, le panier peut être constitué en fils 10 en acier inoxydable assemblés par soudure. Ces fils sont disposés de façon à ne présenter, en aucun cas, un obstacle à l'introduction des lettres. Les traverses 11 réunissant les fils longitudinaux sont situés sous le plan de repos des lettres. La partie inférieure de chaque panier, c'est-à-dire le fond, comporte un décrochement 20 ce qui libère un espace libre sous la pile de lettres permettant une préhension par exemple manuelle et aisée de celle-ci. Le panier peut également être réalisé en tôle perforée ou en métal déployé. La face avant (côté opérateur) est ouverte. La face arrière (côté machine) est garnie d'une tôle lisse 21 profilée dont la fonction est d'éviter tout accrochage des lettres durant leur chute dans le panier.

Ce panier 3 est incliné dans deux plans. Tout d'abord il est incliné selon un angle (α) par rapport au plan d'arrivée du courrier dans le système de convoyage. Cette configuration permet de bénéficier de l'inertie des lettres pour assurer un meilleur taquage frontal.

De plus, les paniers sont fixés perpendiculairement sur le chassis (non représenté), côté machine, portant les accessoire tels que les électroaimants, les poulies,ect. ... et le chassis lui-même est incliné vers l'arrière (par rapport à l'opérateur) pour assurer une bonne stabilité des lettres et éviter le risque qu'elles ne tombent par terre par la face avant ouverte. Cette deuxième inclinaison dont l'angle est voisin de 23° assure également une excellente accessibilité au niveau des paniers dans de bonnes conditions ergonomiques.

Cette disposition inclinée des paniers dans le sens longitudinal permet dans le cas d'un assemblage d'une pluralité de paniers une disposition tuilée qui présente plusieurs avantages, notamment un gain de place appréciable, la face frontale d'un permier panier situé en amont contre laquelle viennent se taquer les lettres sert de face d'entrée pour le panier situé en aval et contigue au premier. De plus, les décrochements dus au tuilage permettent d'y placer des poulies ou tendeurs, des courroies assurant le convoyage, etc. . . . , dans le cas d'une superposition de plusieurs rangées de paniers tous les paniers sont identiques sur toute la longueur de la machine et à tous les niveaux.

Ces paniers sont d'une réalisation facile et suffisamment rigides pour permettre un montage en porte à faux dégageant ainsi l'accessibilité.

Conformément à l'invention, un balancier 25 est associé à chaque panier pour assurer la régulation du flot des lettres. Il est constitué d'un bras 30 par exemple en alliage léger, articulé à l'arrière du volet d'aiguillage 6 auquel il correspond grâce à des moyens d'articulation 31. Le point d'articulation doit être situé de façon telle qu'il ne fasse pas obstacle au bon écoulement des lettres. Son profil a une configuration qui lui permet de jouer le rôle de déflecteurs contribuant à assurer une continuïté de guidage des lettres. Un moyen de guidage 32 représenté sur la figure sous la forme d'un ressort mais qui peut également avoir celle d'un ski rigide assure une continuité de la face de guidage des lettres et évite un éventuel accrochage de celles-ci au niveau de l'articulation du balancier. La longueur du bras 30 doit permettre un débattement correct à l'intérieur du panier. L'extrémité libre de ce bras est garnie d'une languette 40 de matière souple dont la fonction est de réduire la vitesse d'arrivée des lettres évitant ainsi les risques de rebond ou de pivotement. Elle maintient également la pile de lettres en formation. Le poids de ce bras 30 est un paramètre important, il doit être précis et constant pour tous les balanciers 25 car s'il doit assurer un freinage, il ne doit pas provoquer l'arrêt des lettres.

Par exemple, pour une application à du courrier conforme aux normes actuelles, la longueur de la case est de 255 mm, l'axe d'articulation du balancier se situe à 165 mm de la rive de taquage, le poids optimal du balancier est de 100 gr. Celui-ci peut être laissé libre dans ses mouvements (configuration représentée sur la figure). Pour accepter un courrier de format supérieur en dimensions et en poids, il est nécessaire d'avoir un balancier plus long et plus lourd. Dans ce cas ses mouvements doivent être contrôlés par un dispositif autorisant, dans un sens, une liberté d'action de la gravité permettant au balancier d'être toujours en contact avec la pile de lettres, mais limitant le mouvement inverse pour éviter son »affolement« au moment de l'impact dû à l'arrivée d'une lettre lourde.

Ce dispositif, relié directement à l'axe d'articulation du balancier est composé d'un organe du type roue libre ou anti-dévireur accouplé à un système à friction ou à inertie, but étant d'autoriser librement la descente ou la remontée lente du balancier mais aussi de freiner et de limiter une remontée trop rapide.

Ce bras 30 est également muni d'une petite patte 50 en équerre destinée à coopérer avec un détecteur de proximité 51, ce détecteur signale que le remplissage du panier 3 concerné est terminé. Un système de verrouillage 52 permet de neutraliser l'action du balancier 25 en le gardant immobilisé en position haute en cas de besoin. Dans ce cas, le panier correspondant est mis hors service.

L'intérêt de ce verouillage du balancier en position haute, réside dans le fait, qu'en cas de défaillance d'un élément de la case considérée (électro-aimant de commande de volet d'aiguillage par exemple), il est possible de continuer d'utiliser tout le reste de la machine.

Le fonctionnement est dit alors en »mode dégradé« c'est à dire que les lettres destinées à cette case sont simplement envoyées en case rebut de façon identique au fonctionnement normal après détection de case pleine.

Cette configuration est représentée sur la figure dans le cas du panier 3 représenté à gauche de la figure dont le balancier 25 est effectivement immobilisé en position haute.

Un tel dispositif conforme à l'invention s'applique à toute machine de tri de courrier pouvant se présenter notamment sous des formats variés.

De telles machines peuvent comporter une pluralité de paniers 3 équipés de leur 25 emboîtés les uns dans les autres pour former une rangée. Elle peut également comporter une pluralité de rangées disposées par niveaux. La multiplication des rangées en hauteur est limitée par la possibilité d'accessibilité par l'opérateur: actuellement 5 niveaux sont possibles.

Il s'agit donc d'un dispositif très souple modulaire et qui peut être agencé pour s'adapter à toutes les applications de tri de courrier.

## Revendications

1. Dispositif de guidage et de réception de lettres en sortie de machine à trier le courrier comportant un système de convoyage des lettres coopérant avec au moins une case de réception, caractérisé en ce que chaque case se présente sous la forme d'un panier (3) dont les parois permettent la visibilité de son contenu, les lettres dès leur sortie du système de convoyage (1) étant prises en charge par un balancier (25) qui les freine et les guide vers le fond du panier (3) choisi pour constituer une pile, et dont le point d'articulation est solidaire d'un volet (6) chargé de dévier les lettres du système de convoyage.

2. Dispositif de guidage selon la revendication 1 caractérisé en ce que chaque panier (3) est incliné dans le sens longitudinal d'un angle $(\alpha)$ par rapport au plan de cheminement des lettres dans le système de convoyage, cette configuration permettant de bénéficier de l'inertie des lettres pour assurer un taquage frontal correct.

3. Dispositif de guidage selon l'une des revendications précédentes, caractérisé en ce que chaque panier (3) étant fixé perpendiculairement sur un chassis portant notamment le système de convoyage (1), ce chassis est incliné vers l'arrière pour assurer une bonne stabilité des lettres et éviter qu'elles ne tombent par la face avant.

4. Dispositif de guidage selon l'une des revendications précédentes, caractérisé en ce que la face arrière de chaque panier (3) est garnie d'une tole lisse profilée (21) dont la fonction est de guider les lettres en évitant tout accrochage de celles-ci durant leur trajectoire dans le panier (3).

5. Dispositif de guidage selon l'une des revendications précédentes, caractérisé en ce que le fond de chaque panier (3) sur lequel se forme une pile de lettres comporte un décrochement (20), ce qui libère un espace libre sous la pile permettant une préhension aisée de celle-ci.

6. Dispositif de guidage selon l'une des revendications précédentes, caractérisé en ce que chaque balancier (25) est constitué d'un bras rigide (30) se terminant par une languette (40) de matière souple.

7. Dispositif de guidage selon la revendication 6, caractérisé en ce que le profil du bras (30) forme déflecteur, pour guider la trajectoire des lettres dans le panier (3) concerné.

8. Dispositif de guidage selon l'une des revendications 6 et 7, caractérisé en ce que chaque balancier (25) est équipé d'un ressort (32) destiné à ralentir les lettres et éviter leur rebond.

9. Dispositif de guidage selon l'une des revendications 6, 7 et 8 caractérisé en ce que le bras (30) de chaque balancier (25) comporte une patte (50) en équerre destinée à coopérer avec un détecteur de proximité (51) lorsque le panier concerné est plein.

10. Dispositif de guidage selon la revendication 9, caractérisé en ce qu'il comporte un système de verrouillage, correspondant à chaque panier, capable de maintenir le balancier (25) concerné, immobilisé en position haute.

11. Machine de tri de courrier caractérisée en ce qu'elle comprend au moins un dispositif de guidage et de réception des lettres selon l'une des revendications précédentes.

12. Machine de tri de courrier selon la revendication 11 caractérisé en ce qu'elle comprend une pluralité de paniers (3) équipés de leur balancier (25), ces paniers (3) étant emboîtés les uns dans les autres par rangée, la face frontale d'un panier situé en amont étant la face avant d'un panier situé en aval du précédent et qui lui est contigüe.

13. Machine de tri de courrier selon la revendication 12, caractérisé en ce qu'elle comprend une pluralité de rangées disposées par niveau.

14. Machine de tri selon l'une des revendications 11 à 13, caractérisée en ce que chaque volet de déviation (6), lorsqu'il est en position haute dite de repos constitue un plan situé dans le prolongement d'une courroie inférieure (4) sans fin dite amont et celui d'une courroie inférieure (4) dite aval, chaque tronçon (5) de courroies inférieures (4) ainsi constitué entre deux volets successifs étant entraîné par friction, par une courroie ininterrompue supérieure (2), elle-même mis en mouvement par des moyens moteurs, les lettres étant pincées entre la courroie supérieure (2) et les courroies inférieures (4) et cheminant d'un tronçon (5) vers le suivant jusqu'à ce qu'elle rencontre un volet (6) mis en position de déviation qui l'oriente vers le panier (3) correspondant, la lettre ainsi déviée étant alors prise en charge par le balancier (25) associé à ce panier.

## Pantentansprüche

1. Vorrichtung zur Führung und zum Empfang von Briefen am Ausgang einer Postsortieranlage mit einem Brieftransportsystem, das mit mindestens einem Empfangsfach zusammenwirkt, dadurch gekennzeichnet, daß jedes Fach als Korb (3) ausgebildet ist, durch dessen Wände sein Inhalt sichtbar ist, wobei die Briefe unmittelbar am Ausgang des Transportsystems (1) von einem Pendel (25) übernommen werden, das sie bremst und zum Boden des zur Bildung eines Stapels geeigneten Korbs (3) führt und dessen Gelenkpunkt mit einer Klappe (6) verbunden ist, deren Aufgabe es ist, die Briefe vom Transportsystem wegzuleiten.

2. Führungsvorrichtung nach Anspruch 1, dadurch gekennzeichnet, daß jeder Korb (3) in Längsrichtung um einen Winkel $(\alpha)$ bezüglich einer Transportebene der Briefe im Transportsystem geneigt ist, wobei diese Konfiguration die Trägheit der Briefe auszunutzen gestattet, um einen sauberen stirnseitigen Anschlag zu erzielen.

3. Führungsvorrichtung nach einem der vorhergehenden Ansprüche, dadurch gekennzeichnet, daß jeder Korb (3) senkrecht an einem Chassis befestigt ist, das insbesondere das Transportsystem (1) trägt, und daß dieses Chassis nach hinten geneigt ist, um eine gute Stabilität der Briefe sicherzustellen und um zu verhindern, daß sie an der Vorderseite herausfallen.

4. Führungsvorrichtung nach einem der vorhergehenden Ansprüche, dadurch gekennzeichnet, daß die Rückseite jedes Korbes (3) mit einem glatten profilierten Blech (21) versehen ist, das die Aufgabe hat, die Briefe zu führen und zu vermeiden, daß sie während ihres Weges in dem Korb (3) irgendwo anstoßen.

5. Führungsvorrichtung nach einem der vorhergehenden Ansprüche, dadurch gekennzeichnet, daß der Boden jedes Korbs (3), auf dem sich der Briefestapel bildet, einen Absatz (20) aufweist, so daß sich ein freier Raum unter dem Stapel ergibt, der das Ergreifen des Stapels erleichtert.

6. Führungsvorrichtung nach einem der vorhergehenden Ansprüche, dadurch gekennzeichnet, daß jedes Pendel (25) aus einem starren Arm (30) besteht, der in einer Zunge (40) aus weichem Material endet.

7. Führungsvorrichtung nach Anspruch 6, dadurch gekennzeichnet, daß das Profil des Armes (30) einen Abweiser bildet, um die Briefe auf ihrem Weg in dem betroffenen Korb (3) zu führen.

8. Führungsvorrichtung nach einem der Ansprüche 6 und 7, dadurch gekennzeichnet, daß jedes Pendel (25) mit einer Feder (32) versehen ist, die dazu bestimmt ist, die Briefe abzubremsen und ihr Zurückprellen zu verhindern.

9. Führungsvorrichtung nach einem der Ansprüche 6, 7 und 8, dadurch gekennzeichnet, daß der Arm (30) jedes Pendels (25) eine im Winkel abstehende Lasche (50) aufweist, die bestimmt ist, mit einem Annäherungsdetektor (51) zusammenzuwirken, wenn der betroffene Korb voll ist.

10. Führungsvorrichtung nach Anspruch 9, dadurch gekennzeichnet, daß sie ein Verriegelungssystem aufweist, das jedem Korb zugeordnet ist und in der Lage ist, das betreffende Pendel (25) in der oberen Lage festzuhalten.

11. Postsortieranlage, dadurch gekennzeichnet, daß sie mindestens eine Führungs- und Empfangsvorrichtung für Briefe nach einem der vorhergehenden Ansprüche aufweist.

12. Postsortieranlage nach Anspruch 11, dadurch gekennzeichnet, daß sie eine Vielzahl von mit ihren Pendeln (25) ausgerüsteten Körben (3) enthält, die innerhalb von Reihen miteinander verschachtelt sind, wobei die Frontseite eines ersten Korbes die Vorderseite eines hinteren Korbes ist, der hinter dem ersten Korb liegt und an diesen anschließt.

13. Postsortieranlage nach Anspruch 12, dadurch gekennzeichnet, daß sie eine Vielzahl von in Ebenen angeordneten Reihen aufweist.

14. Postsortieranlage nach einem der Ansprüche 11 bis 13, dadurch gekennzeichnet, daß jede Ableitklappe (6) in Hoch- oder Ruhestellung eine Ebene bildet, die in der Verlängerung eines unteren Endlosbands (4), vorderes Band genannt, und eines unteren Endlosbandes (4), hinteres Band genannt, liegt, wobei jeder Abschnitt (5) von auf diese Weise zwischen zwei aufeinanderfolgenden Klappen gebildeten unteren Bändern (4) durch Reibung mit einem ununterbrochenen oberen Band (2) angetrieben ist, wobei letzteres durch Motormittel in Bewegung versetzt wird, daß die Briefe zwischen dem oberen Band (2) und den unteren Bändern (4) eingeklemmt werden und von einem Abschnitt (5) zum nächsten bewegt werden, bis sie auf eine Klappe (6) treffen, die in Ableitposition gebracht ist und den Brief in den entsprechenden Korb (3) umlenkt, worauf der so abgeleitete Brief vom diesem Korb zugleiteten Pendel (25) übernommen wird.

## Claims

1. A device for guiding and receiving letters at the exit of a mail-sorting machine, comprising a system for conveying letters in cooperating relation with at least one receiving compartment, characterized in that each compartment is designed in the form of a basket (3), the walls of which permit visibility of its contents, the letters being received, as soon as they pass out of the conveying system (1), by a pendulum (25) which brakes and guides said letters towards the bottom of the basket (3) chosen to form a stack, the point of articulation of each pendulum being fixed to a flap (6) having the function of deviating the letters from said conveying system.

2. A guiding device according to claim 1, characterized in that each basket (3) is inclined in the longitudinal direction at an angle $(\alpha)$ with respect to the plane of travel of letters within the conveying system, the object of this configuration being to utilize the inertia of the letters in order to ensure correct frontal jogging.

3. A guiding device according to any of the preceding claims, characterized in that, each basket (3) being fixed at right angles on a frame carrying in particular the conveying system (1), said frame is rearwardly inclined in order to ensure good stability of the letters and to prevent said letters from falling out through the front face.

4. A guiding device according to one of the preceding claims, characterized in that the rear face of each basket (3) is fitted with a shaped sheet-metal plate (21) having a smooth surface, the function of said plate being to guide the letters and prevent any hooking of these latters during their travel in the basket (3).

5. A guiding device according to one of the preceding claims, characterized in that the bottom of each basket (3) on which a stack of letters is formed has a stepped portion (20) which forms a free space beneath the stack in order to permit easy gripping of said stack.

6. A guiding device according to one of the preceding claims, characterized in that each pendulum (25) is constituted by a rigid arm (30) terminating in a small tongue (40) of flexible material.

7. A guiding device according to claim 6, characterized in that the profile of the arm (30) forms a deflector for guiding the letters during their travel in the concerned basket (3).

8. A guiding device according to one of claims 6 and 7, characterized in that each pendulum (25) is equipped with a spring (32) for slowing-down the letters and preventing them from rebounding.

9. A guiding device according to one of claims 6, 7 and 8, characterized in that the arm (30) of each pendulum (25) is provided with a right-angled lug (50) which is intended to cooperate with a proximity detector (51) when the corresponding basket is full.

10. A guiding device according to claim 9, characterized in that said device comprises a locking system assigned to each basket and capable of stationarily maintaining the corresponding pendulum (25) in the top position.

11. A mail-sorting machine, characterized in that it comprises at least one device for guiding and receiving letters according to one of the preceding claims.

12. A mail-sorting machine according to claim 11, characterized in that it comprises a plurality of baskets (3) each equipped with a pendulum (25), said baskets (3) being placed in interfitting relation in rows, the front face of a basket located upstream being the front face of a basket which is located downstream and in contiguous relation thereto.

13. A mail-sorting machine according to claim 12, characterized in that it comprises a plurality of rows at different levels.

14. A mail-sorting machine according to one of claims 11 to 13, characterized in that each deviating flap (6) is intended in the top or so-called rest position to constitute a plane located in the line of extension of a bottom endless belt (4) designated as an upstream belt and in the line of extension of a bottom endless belt (4) designated as a downstream belt, each bottom-belt section (5) thus formed between two successive flaps being frictionally driven by a continuous top belt (2) which is in turn set in motion by driving means, the letters being pinched between the top and bottom belts (2, 4) and transferred from one section (5) to the next until they encounter a flap (6) placed in the deviating position so as to direct said letter towards the corresponding basket (3), the letter thus deviated being then taken and transferred by the pendulum (25) associated with said basket.

0 077 251